# EUROPEAN PATENT SPECIFICATION

(11) **EP 2 962 885 B1**
(45) Date of publication and mention of the grant of the patent: **31.07.2019**
(21) Application number: 13876347.9
(22) Date of filing: 18.12.2013
(51) Int. Cl.: B60K 6/48, B64D 27/24, B64D 27/04, B64D 35/08, B64D 27/02

(54) **HYBRID POWER SYSTEM FOR PISTON ENGINE AIRCRAFTS**
HYBRIDANTRIEBSSYSTEM FÜR KOLBENMOTORFLUGZEUGE
SYSTÈME DE PUISSANCE HYBRIDE POUR AÉRONEFS À MOTEUR À PISTON

(30) Priority: 28.02.2013 ES 201300217
(43) Date of publication of application: 06.01.2016
(73) Proprietor: Axter Aerospace SL, 28011 Madrid (ES)
(72) Inventor: CRISTÓBAL RAMÍREZ, Daniel, 28011 Madrid (ES); SUÁREZ SÁNCHEZ, Miguel Ángel, 28045 Madrid (ES)
(86) International application number: PCT/ES2013/000275
(87) International publication number: WO 2014/131914

(56) References cited:
- WO-A2-2008/086774
- DE-A1-102007 017 332
- DE-A1-102008 014 404
- US-A- 3 455 182
- US-A1- 2002 084 120
- US-A1- 2006 048 988
- US-A1- 2008 184 906
- US-A1- 2008 184 906
- US-A1- 2010 013 223
- US-A1- 2012 209 456
- US-A1- 2012 209 456

## Description

Current single- and twin-engine piston powered aircraft, both ultralights and those operating under general aviation, have a deficiency in their level of flight safety. These aircraft gain propulsion via a propeller connected through a gearbox or directly to a piston engine. This necessitates that in the case of the main engine being unavailable for any reason, the pilot is forced to declare an emergency and land in an area free of obstacles that is within the glide distance of the aircraft. This usually causes damage to the aircraft, and can cause injury with very serious or fatal consequences. This situation is only aggravated during nocturnal flight due to poor visibility.

Document US 2012/0209456 A1 shows an unmanned air vehicle including a combustion engine, an electric motor, a clutch between the electric motor and the combustion engine, a propeller connected to the electric motor and a battery to drive the electric motor.

The main objective of this invention is to provide an alternative method of propulsion when the main engine is non-operational. This invention provides the propulsion necessary for the pilot to reach an alternate airstrip or a safer area to land, with a consequent increase in aircraft safety. Furthermore, the invention brings other functions as detailed below.

### Invention Background

### Piston engine aircraft

Traditionally, piston engine aircraft rely solely on their main engine's propulsion. Its failure thus leaves the aircraft without thrust, and with the threat of the serious consequences described above.

The engine failure may be caused by a variety of circumstances, including the following:
- An internal failure or failure of engine components.
- A failure in another system associated with the engine.
- A failure in the instrumentation system.
- Human error, by both the pilot and during aircraft maintenance.
- A fire in the engine or fuel tank.

### Aircraft propulsion system

The present aircraft propulsion system uses a propeller coupled to a reciprocating engine, directly or through a gearbox that allows a reduction of the velocity transmitted from the engine to the propeller. From the cabin, the ignition, the air/fuel mixture, and the throttle can be controlled. If the unit is equipped with a variable pitch propeller, this is also controlled from the cabin. Furthermore, the cabin is generally equipped with instruments showing engine parameters, including: oil temperature, oil pressure, RPMs, exhaust temperature, torque meter, etc.

### Engine electrical system

Aircraft are equipped with an electrical system that consists primarily of an alternator and battery. The alternator is connected to the main engine, providing electrical power to the aircraft and charging the battery when the combustion engine is running. When the alternator is not being driven by the main engine, the battery supplies all electrical power to the aircraft.

The power switches for the battery and alternator are located in the cockpit, as well as the indicators of their operation.

### INVENTION DESCRIPTION

To solve the problems described above, the invention proposes a power system according to claim 1 and a method of operating the power system according to claim 2. The electric motor-generator-starter is connected to the propeller, and can generate thrust to propel the aircraft in the event of the failure of the combustion engine, helping the pilot to land safely at a nearby airfield or area free of obstacles.

The starter-generator-electric motor also can be used as an electric generator and as a starter for the combustion engine, eliminating the need for conventional starters and alternators as well as the electrical and mechanical interface associated with them. The starter-generator-electric motor can be built using permanent magnets (brushless), wound rotors, induction, or using DC.

The battery may be chosen from one of the following: lithium polymer, LiFeP04, oxygen lithium, nickel cadmium, nickel metal hydride, lead acid, calcium silver or silver zinc. The electronic control system may include one of the following: current inverter, voltage regulator or frequency controller. The clutches may be chosen from one of the following: friction, unidirectional rotation, centrifugal, electromechanical, electromagnetic or hydraulic. A control and information system in the cabin may be used by the pilot. A system for battery charging may include a battery management system and/or a battery cell regulator/balancer). A gearbox is incorporated.

The functions of the invention are:
- An auxiliary engine system.
- A system for generation and storage of electricity.
- A system for starting the main engine.

### BRIEF DESCRIPTION OF FIGURES

**Figure 1**.**-** Diagram of an exemplary design of an electrical auxiliary power system with an electric motor-generator-starter installed in series via a clutch to the power source.
**Figure 2**.- Diagram of an exemplary design of an electrical auxiliary power system with an electric motor-generator-starter coupled to the power plant through a gearbox.
**Figure 3**.**-** Diagram of a design of the power system according to the invention with an electric motor-generator-starter coupled to the power plant through a gearbox and a clutch.
**Figure 4****.**- Diagram of a further exemplary design of an electrical auxiliary power system with the propeller and the electric motor-generator-starter coupled to the power source through a gearbox.

### DESCRIPTION OF THE DESIGN

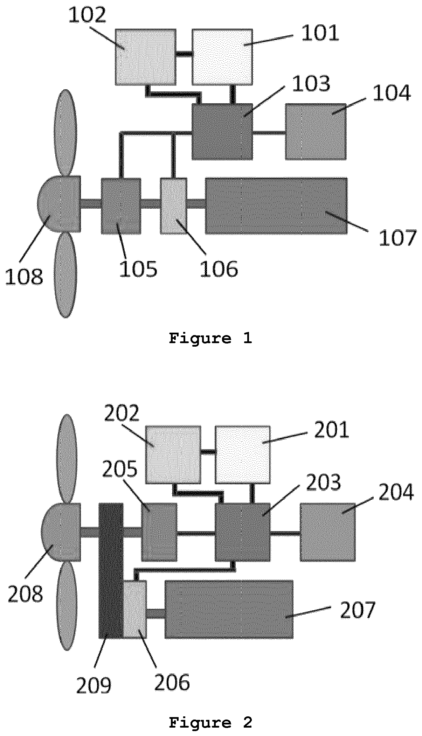

In Figure 1 a diagram of an exemplary design is shown. The electric starter-generator-motor (105) is connected directly to the propeller (108), a clutch (friction, unidirectional rotation, centrifugal, electromechanical, electromagnetic or hydraulic) (106) for decoupling the main motor (107) is installed between the starter-generator-motor (105) and the main motor (107). The electronic control unit (103) controls the clutch (friction, unidirectional rotation, centrifugal, electromechanical, electromagnetic or hydraulic) (106) and the starter-generator-motor (105). The battery (101), the external charging system (102) and the control and display system in the cockpit (104) are connected to the electronic control unit (103).

Depending on the design of the aircraft propulsion system, a gearbox may be incorporated between the propeller, the main engine, and the electric starter-generator-motor.

In this case, the design is composed of the following parts: main motor, starter-generator-electric motor, gearbox, clutch (friction, unidirectional rotation, centrifugal, electromechanical, electromagnetic or hydraulic), electronic control system, battery, external charging system, and control and display system in the cabin.

Figure 2 shows an exemplary design with the gearbox. The propeller (208) is connected to the gearbox (209). The starter-generator-electric motor (205) is directly connected to the gearbox (209), and a clutch (friction, unidirectional rotation, centrifugal, electromechanical, electromagnetic or hydraulic) (206), which allows decoupling the main motor (207), is installed between the gearbox (209) and main motor (207). The electronic control unit (203) controls the clutch (friction, unidirectional rotation, centrifugal, electromechanical, electromagnetic or hydraulic) (206) and the electric starter-generator-motor (205). The battery (201), the control and display system in the cockpit (204), and the external charging system (202) are connected to the electronic control unit (203).

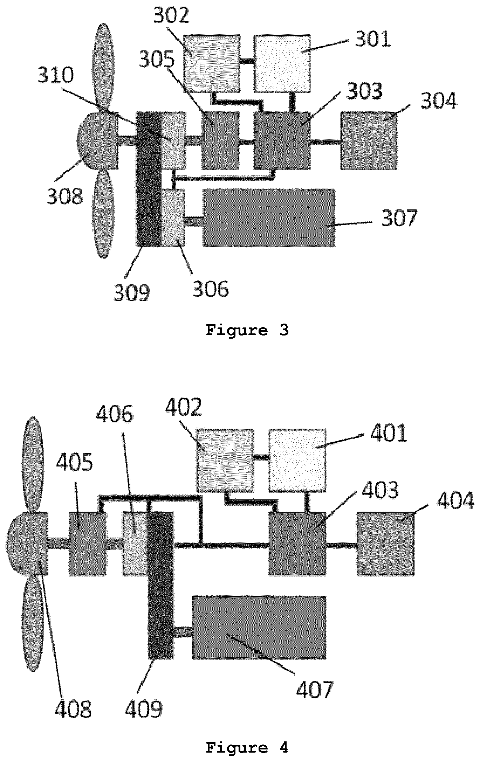

Figure 3 shows the design with a gearbox and two clutches (friction, unidirectional rotation, centrifugal, electromechanical, electromagnetic or hydraulic). The propeller (308) is connected to the gearbox (309). The electric starter-generator-motor (305) is connected to the gearbox (309) through a clutch (friction, unidirectional rotation, centrifugal, electromechanical, electromagnetic or hydraulic) (310). The main motor (307) is coupled to the gearbox via a clutch (friction, unidirectional rotation, centrifugal, electromechanical, electromagnetic or hydraulic) (306). The electronic control unit (303) controls the clutches (friction, unidirectional rotation, centrifugal, electromechanical, electromagnetic or hydraulic) (306 and 310) and the electric starter-generator-motor (305). The battery (301), the control and display system in the cockpit (304), and the external charging system (302) are connected to the electronic control unit (303).

In Figure 4, an exemplary design is shown with a gearbox. The propeller (408) is connected to the electric starter-generator-motor (405), with the motor being connected to the gearbox (409) through a clutch (friction, unidirectional rotation, centrifugal, electromechanical, electromagnetic or hydraulic) (406). The electronic control unit (403) controls the clutch (friction, unidirectional rotation, centrifugal, electromechanical, electromagnetic or hydraulic) (406) and starter-generator-electric motor (405). The battery (401), the control and display system in the cockpit (404), and the external charging system (402) are connected to the electronic control unit (403).

## Claims

1. Power system for an aircraft, containing:
- an electric motor-generator-starter (305) connected to a gearbox (309), with any drive ratio, through a first clutch (310)
- a battery (301)
- a combustion engine (307), connected to the gearbox (309) through a second clutch (306), where the electric motor-generator-starter (305) is arranged to be driven by the combustion engine (307) to generate electricity, which is stored in the battery (301)
- a control system for charging and discharging of the battery (302)
- an electronic control system (303)
- a display and control system in the cabin (304)
- a propeller (308) connected to the gearbox (309)

2. Method of operating the power system as referred to in claim 1, **characterized in that** the electric motor-generator-starter (305) moves the propeller (308) through the gearbox (309), keeping the drive shaft of the combustion engine (307) isolated from the gearbox (309) through the clutch (306), propelling the aircraft through its operations on the ground or in flight.

3. Method of operating the power system as referred to in claim 1, **characterized in that** the electrical auxiliary power system is propelling the aircraft in its operations on the ground and in flight via the propeller (308), which is simultaneously driven by the electrical motor-generator-starter (305) and the combustion engine (307).

4. Method of operating the power system as referred to in claim 2, **characterized in that**, in flight, the electric motor-generator-starter (305) propels the aircraft when the combustion engine (307) has partially or completely lost power.

5. Airplane comprising the power system of claim 1.

## Patentansprüche

1. **EIN ANTRIEBSSYSTEM FÜR FLUGGERÄTE**, beinhaltend:
- ein elektrischer Motor-Starter-Generator (305) verbunden mit einem stufenlosen Getriebe bzw. einem Getriebe beliebiger Übersetzung (309), über eine erste Kupplung (310),
- eine Batterie (301)
- ein Verbrennungsmotor (Kolbenmotor) (307), verbunden mit einem Getriebe (309) über eine zweite Kupplung (306). Dabei wird der Motor-Starter-Generator (305) vom Verbrennungsmotor (307) angetrieben und erzeugt elektrische Energie, die in einer Batterie (301) gespeichert werden kann.
- einer Ladeelektronik (302) zur Be- und Entladung der Batterie
- eine elektrischen Steuerung (303)
- ein Kontroll- und Anzeigesystem in Cockpit (304)
- ein Propeller (308), angeschlossen an ein Getriebe (309)

2. **METHODE ZUM BETRIEB DES ANTRIEBSSYSTEMS**, wie bereits unter Patentanspruch 1 beschrieben, treibt der Motor-Starter-Generator (305) den Propeller (308) über ein Getriebe (309) an, während die Antriebswelle des Hauptmotors (307) über eine Kupplung (306) trennbar ist.

3. **METHODE ZUM BETRIEB DES ANTRIEBSSYSTEMS**, wie bereits unter Patentanspruch 1 beschrieben, treibt der Motor-Starter-Generator (305) das Fluggerät über den Propeller (308) an - gleichzeitig mit dem Hauptantrieb (307).

4. **METHODE ZUM BETRIEB DES ANTRIEBSSYSTEMS**, wie bereits unter Patentanspruch 2 beschrieben, treibt der Motor-Starter-Generator (305) das Fluggerät in dem Moment an, wenn der Hauptmotor (307) Leistung verliert oder komplett ausfällt.

5. **Flugzeug mit dem Antriebssystem entsprechend Patentanspruch 1**

## Revendications

1. **SYSTÈME D'ALIMENTATION D'UN AVION**, contenant:
- un moteur électrique générateur-démarreur (305) connecté à une boîte de vitesses (309), quel que soit le rapport de vitesse, par un premier embrayage (310),
- une batterie (301)
- un moteur à combustion (307), connecté à une boîte de vitesses (309), par un second embrayage (306), où le moteur électrique générateur-démarreur (305) est guidé par le moteur à combustion (307) afin de générer de l'électricité, qui est ensuite conservée dans la batterie (301).
- un système contrôlant la charge et la décharge de la batterie (302)
- un système de contrôle électronique (303)
- un système d'affichage et de contrôle dans la cabine (304)
- une hélice (308) connectée à la boîte de vitesses (309)

2. **MÉTHODE D'OPÉRATION DU SYSTÈME D'ALIMENTATION**, comme décrit à l'article 1, **caractérisée par le fait que** le moteur électrique générateur-démarreur (305) active l'hélice (308) à travers la boîte de vitesses (309), tout en gardant l'arbre de transmission du moteur à combustion (307) isolé de la boîte de vitesses (309) par l'embrayage (306), propulsant l'avion pendant ses opérations au sol ou en vol.

3. **MÉTHODE D'OPÉRATION DU SYSTÈME D'ALIMENTATION**, comme décrit à l'article 1, **caractérisée par le fait que** le système d'alimentation électrique auxiliaire propulse l'avion pendant ses opérations au sol ou en vol par l'hélice (308), qui est simultanément activée par le moteur électrique générateur-démarreur (305) et le moteur à combustion (307).

4. **MÉTHODE D'OPÉRATION DU SYSTÈME D'ALIMENTATION**, comme décrit à l'article 2, **caractérisée par le fait qu'**en vol le moteur électrique générateur-démarreur (305) propulse l'avion quand le moteur à combustion (307) a partiellement ou complétement perdu sa puissance.

5. **Avion comprenant le système d'alimentation de l'article 1**
